# EUROPEAN PATENT SPECIFICATION

(11) **EP 0 448 538 B1**
(45) Date of publication and mention of the grant of the patent: **02.01.1997**
(21) Application number: 91870040.2
(22) Date of filing: 14.03.1991
(51) Int. Cl.: A01N 57/20, A01N 33/22, A01N 25/14

(54) **Improved glyphosate formulations**
Glyphosatformulierungen
Formulation de glyphosate

(30) Priority: 15.03.1990 US 491543
(43) Date of publication of application: 25.09.1991
(73) Proprietor: MONSANTO COMPANY, St. Louis Missouri 63167 (US)
(72) Inventor: Kuchikata, Masuo, Ryugasaki-City, Ibaraki-Pref. (JP); Richardson, Ronald Owen, Ellisville, Missouri 63011 (JP); Sato, Tatsuo, Chofu-City, Tokyo (JP)
(74) Representative: Bosch, Henry

(56) References cited:
- EP-A- 0 143 547
- EP-A- 0 290 416
- EP-A- 0 378 985
- EP-A- 0 394 211
- WO-A-89/12394
- GB-A- 1 399 005
- AGRIBUSINESS U.S.A., DATABASE, accession no. 48645, on-line print out, Pioneer Hi-Bred International, Inc., Johnston, JA, US; N.N: "Tank mix stirring controversy", & CALIFORNIA & WESTERN STATES GRAPE GROWER, 18(1), 20-21 (1987)

## Description

The invention comprises a dry, water soluble, agriculturally acceptable herbicidal composition comprising N-phosphonomethylglycine and oxyfluorfen as a water-dispersible granule and a process for preparing the same.

Glyphosate (N-phosphonomethylglycine) is well known in the art as an effective herbicide. It is also known that glyphosate, an organic acid, is relatively insoluble in water. Glyphosate is typically formulated as a water-soluble salt, especially as the isopropylamine salt (IPA salt) to kill or control weeds or plants. Glyphosate is typically sold as an aqueous concentrate.

Oxyfluorfen is 2-chloro-a,a,a-trifluoro-p-tolyl 3-ethoxy-4-nitrophenyl ether. Technical oxyfluorfen is a red to yellow solid having a melting point of 65-84 C. Oxyfluorfen is a selective herbicide applied by preemergence or postemergence applications to cotton, onions, peanuts, soyabeans, sugarcane, trees and vegetables, controlling monocotyledonous and broad-leaved weeds. Goal ("Goal" is a registered trademark) is sold as a 2E, EC (236 grams/kilogram and Goal is also sold as 1G,GR (10 grams per kilogram).

EP-A-0 143 547 discloses a herbicidal composition comprising a glyphosate-type herbicide and at least one oxyfluorfen-type herbicide, and a compatible carrier, in the ratio of 0.18 to 2.5 mole equivalents oxyfluorfen per mole equivalent of glyphosate. Said composition is preferably in liquid form; no solid formulation or process for manufacturing it is disclosed. The composition is said to exhibit enhanced phytotoxicity, increased speed of action as compared to glyphosate alone and excellent residual activity.

The California & Western States Grape Grower article, 18(1), 20-21(1987) suggests tank mixes of glyphosate with oxyfluorfen in order to better control tough broadleaf weeds.

WO-A-89/12394 discloses herbicidal compositions comprising a herbicide, humectant and silicone surfactant. As examples for herbicides, glyphosate herbicide and oxyfluorfen are cited. There is, however, no disclosure of a solid formulation of glyphosate and oxyfluorfen or of a process for the preparation thereof.

EP-A-0 290 416 discloses an aqueous composition comprising glyphosate herbicide, a particular amine surfactant and possibly ammonium sulfate.

Similarly Chem. Abs. 113, 36393 (1990) discloses a herbicidal glyphosate composition comprising carbonates, more particularly ammonium carbonate, and surfactant such as ethoxylated alkylamine and octaethylene glycol monylphenyl ether. When water is added the carbonate and glyphosate react to form a salt, such as for instance the ammonium salt. Solid formulations of glyphosate with oxyfluorfen are not described.

GB-A-1 399 005 (Ciba-Geigy) discloses a solid herbicidal composition comprising water-insoluble herbicide and water-soluble herbicide and one or more surfactants, where all the granules in the composition have a mean particle size of at least 0.1 mm. According to this document, the herbicides are milled. Mixtures of glyphosate and oxyfluorfen are not disclosed.

WO-A-90/07275 together with EP-A-0 378 985 has been filed before but published after the priority date of this patent application. It describes dry water soluble compositions comprising glyphosate herbicide and at least one liquid surfactant. The composition may further comprise a solid water-insoluble co-herbicide. The process for the preparation of such compositions seems to be restricted to simple admixing of the active ingredients and granulation steps.

EP-A- 0 394 211 has also been filed before but published after the priority date of the instant case. Example 12 discloses a granule of formulated glyphosate herbicide and oxyfluorfen. According to this document, a suspension of oxyfluorfen in one surfactant, that is Sorpol 3005C ("Sorpol" is a tradename), and water is prepared at a temperature of 60°C. The premix is then mixed with ammonium glyphosate and ammonium sulfate. This mixture is then combined with further surface active material and kneaded to form a dough for extrusion, the extrudates then being dried.

The object of the present invention is to provide an improved dry formulation or water-dispersible granule, comprising N-phosphonomethylglycine or a water-soluble salt thereof and oxyfluorfen.

Another object of the present invention is to provide a process for the preparation of such a dry formulation of N-phosphonomethylglycine and oxyfluorfen.

According to the present invention the process comprises the steps of :
(a) preparing a solution (first premix) of
   (i) oxyfluorfen in
   (ii) at least one surfactant and
   (iii) water or solvent
   at a temperature in the range from 50°C to 80°C.
(b) forming a second premix by admixing :
   (i) either N-phosphonomethylglycine and a suitable acid acceptor; or a water-soluble salt of N-phosphonomethylglycine;
   (ii) optionally pre-ground ammonium sulfate;
(c) combining second premix with first premix in a mixer/kneader to form an extrudable composition and
(d) extruding said extrudable composition in an extruder through a die face having openings in the range from about 0.5 to about 2 mm in diameter to form extruded granules and thereafter
(e) drying said extruded granule to form said water dispersible granule.

One preferred class of wetting agent which may be employed in the process of this invention has the average formula: 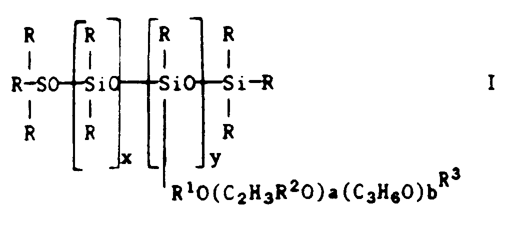 where each R is independently a monovalent hydrocarbyl radical, R¹ is a divalent hydrocarbylene radical, R² is independently hydrogen or a lower hydroxyalkyl radical, R³ is hydrogen or a monovalent hydrocarbyl radical, x, y, a and b are integers independently greater than or equal to zero, with the proviso that a has a sufficient value and b is small enough so that the composition of the invention will have a desired dissolution rate in water of less than five minutes. Preferably in the compound of Formula I, R and R3 are methyl, R¹ is C₃H₆, R² is hydrogen, x is zero or one, y is one to five, a is five to 20 and b is zero.

Organosilicone wetting agents are generally described in the above mentioned Union Carbide Corporation product literature in U.S. Patents No.s 3, 505,377, 3,980, 688 and 4, 431, 789 the disclosures of which are incorporated herein by reference in their entirety. Several of such ethoxylated wetting agents are available from Union Carbide Corporation as SILWET surface active copolymers ("Silwet" is a registered trademark). Preferred SILWET surface active copolymers include SILWET L-77, L-7600, L-7602 and L-7607. SILWET L-77 is the preferred ethoxylated wetting agent. It is believed to have Formula I above, where R and R³ are methyl, R¹ is C₃H₆, R2 is hydrogen, x is zero or one, y is one or two , a is about seven and b is zero.

The process of extruding is carried out at a temperature in the range from about ambient to 70°C. The process time for forming second premix is in the range from 20 to about 40 minutes. The temperature of combination is carried out at a temperature equal to or above the melting point of oxyfluorfen.

A dryer may be a fluidized bed dryer.

The most preferred glyphosate salts are the ammonium, sodium salts or their mixtures.

The solvents are preferably selected from the group consisting of ethyleneglycol, diethyleneglycol, tripropyleneglycol, polyethyleneglycol, propyleneglycol, dipropyleneglycol tripropyleneglycol polypropyleneglycol, ethyleneglycol monoalkyl ether, propyleneglycol monoalkyl ether, polyethyleneglycol monoalkyl ether, 1,1-diphenylethane, 1,1-ditolylethane 1-phenyl-1,xylylethane, 1-phenyl-1-(ethylphenyl)ethane, 1-xylyl-1-(α-methyl benzyl phenyl)ethane, bis-(α-methyl benzyl) xylene, 1-methyl naphthaline, monoethyl diphenyl, triethyl diphenyl and mixture thereof.

The application of an effective amount of the herbicidally active compound(s) used in the composition of this invention to the plant is essential for the practice of the present invention. The exact amount of herbicide containing N-phosphonomethylglycine and oxyfluorfen as the active ingredients to be employed is dependent upon the response desired in the plant, as well as such other factors as the plant species and stage of development thereof, the amount of rainfall, as well as the specific composition employed. In foliar treatment for the control of vegetative growth, the active ingredients are applied in amounts from about 0.01 to about 20 or more pounds per acre. In applications for the control of aquatic plants, the active ingredients are applied in amount of from about 0.01 parts per million to about 1000 parts per million, based on the aquatic medium. An effective amount for phytotoxic or herbicidal control is that amount necessary for overall or selective control, i.e. a phytotoxic or herbicidal amount. It is believed that one skilled in the art can readily determine from the teachings of this specification and patents referred to herein by reference the approximate application rate. Granules may be applied using conventional broadcast techniques.

The following examples are presented to illustrate the present invention, as well as some of the various embodiments of the invention. All percentages in the following examples are on a weight basis unless otherwise indicated.

### Example 1

A vessel was charged with 9 parts of Sorpol 7553, 0.5 parts of Sorpol 3880 N, 0.5 parts of Silwet L-77, 6 parts of Newkalgen 4016 HEB and 3.1 parts of Goal technical. Newkalgen is a tradename.

Sorpol 7553 is an ethoxylated (15) tallow amine surfactant. Sorpol 3880 N is a surfactant mixture of ethoxylated (14-19) styrylphenyl ether (80%) and ethoxylated (50) caster oil (20%). Newkalgen 4016 HEB is an ethoxylated (15) propoxylaled (15)-2-ethylhexyl ether having a molecular weight of about 1600.

The vessel was heated gently in a water bath. The mixture was stirred for 1/2 hour at 60°C to make a viscous solution. The viscous solution was added into the mixture of 42 parts of glyphosate ammonium salt powder, 24 parts of monoammonium phosphate powder, 15.4 parts of ammonium sulfate powder and 3 parts of water in a pestle and a mortar. The mixture was mixed and kneaded for 20 minutes to make dough like materials. The dough like material was fed to a handy type extruder with 1.0 mm screen and extruded through the screen hole to five extruded granules. The extruded granules were dried with a fan dryer at 60-70°C and sieved with 12-48 mesh sieves.

### Example 2

| Formulation Example: | % |
|---|---|
| Glyphosate salt (Na salt/NH₄ salt)(85% ae) | 43.0 |
| Goal tech (69% ai) | 3.1 |
| Sorpol 7553 | 9.0 |
| Sorpol 3880N | 0.5 |
| Newkalgen 4016 | 6.0 |
| Silwet L-77 | 0.5 |
| Ammonium sulfate | 38.9 |
| | 100.0 |
| ae = acid equivalent ai = active ingredient | |

## Claims

1. A process for preparing a water dispersible granule of N-phosphonomethylglycine or a water soluble salt thereof and oxyfluorfen which comprises :
(a) preparing a solution (first premix) of
(i) 3.1 parts of oxyfluorfen (69% a.i.) in
(ii) 9 parts of ethoxylated (15) tallow amine,
0.4 parts of ethoxylated (14-19) styrylphenyl ether,
0.1 parts of ethoxylated (50) castor oil,
6.0 parts of ethoxylated (15) propoxylated (15)-2-ethylhexyl ether having a molecular weight of about 1600, and
0.5 parts of organosilicone wetting agent
at a temperature in the range from 50°C to 80°C
(b) forming another premix by admixing :
(i) 42 parts of glyphosate as the ammonium salt or as a mixture of the ammonium salt with the sodium salt (85% a.e.); and
(ii) 38.9 parts of pre-ground ammonium sulfate or a combination 15.4/24 of ammonium sulfate with ammonium phosphate;
(c) combining premix of (a) with the premix of (b) in a mixer/kneader to form an extrudable composition;
(d) extruding said extrudable composition in an extruder through a die face having openings in the range from about 0.1 to about 2 mm in diameter to form extruded granule and thereafter
(e) optionally drying said extruded granule to form said water dispersible granule product.

2. The process of claim 1 wherein the combination is carried out at a temperature equal to or above the melting point of oxyfluorfen.

3. The process of claim 2 wherein said drying is carried out in a fluidized bed dryer.

4. The process of claim 2 or 3 wherein said drying is carried out in a fluidized bed agglomerator.

5. A water-dispersible granule of N-phosphonomethyglycine and oxyfluorfen consisting of :
- 3.1 parts of oxyfluorfen (69% a.i.);
- 42.0 parts of glyphosate as the ammonium salt or as a mixture of the ammonium salt with the sodium salt (85% a.e.);
- 9 parts of ethoxylated (15) tallow amine;
- 0.4 parts of ethoxylated (14-19) styrylphenylether;
- 0.1 parts of ethoxylated (50) castor oil;
- 0.5 parts of organosilicone surfactant;
- 6.0 parts of ethoxylated (15)-polypropoxylated (15) 2-ethylhexyl ether having a molecular weight of about 1600;
- 38.9 parts of ammonium sulphate or a combination 15.4/24 of ammonium sulphate with ammonium phosphate.

6. A solution of oxyfluorfen comprising
- 3.1 parts of oxyfluorfen (69% a.i.);
- 9 parts of ethoxylated (15) tallow amine;
- 0.4 parts of ethoxylated (14-19) styrylphenylether;
- 0.1 parts of ethoxylated (50) caster oil;
- 0.5 parts of organosilicone surfactant;
- 6.0 parts of ethoxylated (15)-propoxylated (15) 2-ethylhexyl ether having a molecular weight of about 1600;

7. A method of killing or controlling weeds by applying to the plant to be killed or controlled an effective amount of the composition of Claim 5 or as obtainable according to the process of Claims 1-4.

## Patentansprüche

1. Verfahren zur Herstellung eines wasserdispergierbaren Granulats aus N-Phosphonomethylglycin oder einem wasserlöslichen Salz hievon und Oxyfluorfen, welches umfaßt:
(a) Herstellen einer Lösung (erste Vormischung) von:
(i) 3,1 Teilen Oxyfluorfen (69 % ai) in
(ii) 9 Teilen ethoxyliertem (15) Talgamin,
0,4 Teilen ethoxyliertem (14-19) Styrylphenylether,
0,1 Teilen ethoxyliertem (50) Castoröl,
6,0 Teilen ethoxyliertem (15) propoxyliertem (15) 2-Ethylhexylether mit einer Molmasse von etwa 1600, und
0,5 Teilen Organosilikon-Netzmittel,
bei einer Temperatur im Bereich von 50°C bis 80°C,
(b) Bilden einer weiteren Vormischung durch das Mischen von:
(i) 42 Teilen Glyphosat als Ammoniumsalz oder als Mischung des Ammoniumsalzes mit dem Natriumsalz (85 % ai); und
(ii) 38,9 Teilen vorgemahlenem Ammoniumsulfat oder einer Kombination von 15,4/24 Ammoniumsulfat mit Ammoniumphosphat;
(c) Kombinieren der Vormischung von (a) mit der Vormischung von (b) in einem Mischer/Kneter, wobei eine extrudierbare Zusammensetzung gebildet wird;
(d) Extrudieren der extrudierbaren Zusammensetzung in einem Extruder durch eine Formoberfläche mit Öffnungen mit einem Durchmesser im Bereich von etwa 0,1 bis etwa 2 mm, wobei ein extrudiertes Granulat gebildet wird, und danach
(e) gegebenenfalls Trocknen des extrudierten Granulats, wobei das wasserdispergierbare Granulat-Produkt gebildet wird.

2. Verfahren nach Anspruch 1, bei welchem das Kombinieren bei einer Temperatur gleich oder über dem Schmelzpunkt von Oxyfluorfen durchgeführt wird.

3. Verfahren nach Anspruch 2, bei welchem das Trocknen in einem Fließbett-Trockner durchgeführt wird.

4. Verfahren nach Anspruch 2 oder 3, bei welchem das Trocknen in einem Fließbett-Agglomerator durchgeführt wird.

5. Wasserdispergierbares Granulat aus N-Phosphonomethylglycin und Oxyfluorfen, bestehend aus:
- 3,1 Teilen Oxyfluorfen (69 % ai);
- 42,0 Teilen Glyphosat als Ammoniumsalz oder als Mischung des Ammoniumsalzes mit dem Natriumsalz (85 % ai);
- 9 Teilen ethoxyliertem (15) Talgamin;
- 0,4 Teilen ethoxyliertem (14-19) Styrylphenylether;
- 0,1 Teilen ethoxyliertem (50) Castoröl;
- 0,5 Teilen Organosilikon-Surfactant;
- 6,0 Teilen ethoxyliertem (15) polypropoxylierten (15) 2-Ethylhexylether mit einer Molmasse von etwa 1600;
- 38,9 Teilen Ammoniumsulfat oder einer Kombination von 15,4/24 Ammoniumsulfat mit Ammoniumphosphat.

6. Lösung von Oxyfluorfen, umfassend:
- 3,1 Teile Oxyfluorfen (69 % ai);
- 9 Teile ethoxyliertes (15) Talgamin;
- 0,4 Teile ethoxylierten (14-19) Styrylphenylether;
- 0,1 Teile ethoxyliertes (50) Castoröl;
- 0,5 Teile Organosilikon-Surfactant;
- 6,0 Teile ethoxylierten (15) propoxylierten (15) 2-Ethylhexylether mit einer Molmasse von etwa 1600.

7. Verfahren zum Abtöten oder Bekämpfen von Unkräutern durch das Aufbringen einer wirksamen Menge der Zusammensetzung nach Anspruch 5, oder wie sie durch das Verfahren nach einem der Ansprüche 1 bis 4 erhalten werden kann, auf die abzutötende oder zu bekämpfende Pflanze.

## Revendications

1. Procédé pour préparer un granule pouvant être dispersé dans l'eau de N-phosphonométhylglycine ou d'un de ses sels solubles dans l'eau et d'oxyfluorfène, qui comprend :
(a) la préparation d'une solution (premier pré-mélange)
(i) de 3,1 parties d'oxyfluorfène (63 % d'ingrédients actifs) dans
(ii) 9 parties d'amine de suif éthoxylée (15),
0,4 partie d'éther styrylphénylique éthoxylé (14-19),
0,1 partie d'huile de ricin éthoxylée (50),
6,0 parties d'éther 2-éthyléxylique éthoxylé (15) propoxylé (15) ayant une masse moléculaire d'environ 1600, et
0,5 partie d'un agent mouillant en organosilicone,
à une température comprise dans la gamme de 50°C à 80°C
(b) la formation d'un autre pré-mélange en mélangeant :
(i) 42 parties de glyphosate comme un sel d'ammonium ou comme un mélange du sel d'ammonium avec le sel de sodium (85 % d'équivalent acide); et
(ii) 38,9 parties d'un sulfate d'ammonium pré-broyé ou de la combinaison 15,4/24 de sulfate d'ammonium avec du phosphate d'ammonium;
(c) la combinaison du pré-mélange de (a) avec le pré-mélange de (b) dans un mélangeur/malaxeur afin de former une composition pouvant être extrudée;
(d) l'extrusion de ladite composition pouvant être extrudée dans une extrudeuse à travers la face d'une matrice ayant des ouvertures d'un diamètre compris dans la gamme d'environ 0,1 à environ 2 mm afin de former un granule extrudé, et ensuite
(e) le séchage facultatif dudit granulé extrudé afin de former ledit granule pouvant être dispersé dans l'eau ainsi produit.

2. Procédé selon la revendication 1, dans lequel la combinaison est effectuée à une température égale ou supérieure au point de fusion de l'oxyfluorfène.

3. Procédé selon la revendication 2, dans lequel ledit séchage est exécuté dans un séchoir à lit fluidisé.

4. Procédé selon la revendication 2 ou 3, dans lequel ledit séchage est effectué dans un agglomérateur à lit fluidisé.

5. Granule pouvant être dispersé dans l'eau de N-phosphonométhylglycine et d'oxyfluorfène constitué essentiellement de :
- 3,1 parties d'oxyfluorfène (69 % d'ingrédients actifs)
- 42,0 de glyphosate comme le sel d'ammonium ou comme un mélange du sel d'ammonium avec le sel de sodium (85 % d'équivalent acide);
- 9 parties d'amine de suif éthoxylée (15);
- 0,4 partie d'éther styrylphénylique éthoxylé (14-19);
- 0,1 partie d'huile de ricin éthoxylée (50);
- 0,5 partie d'un agent tensio-actif en organosilicone;
- 6,0 parties d'éther 2-éthylhexylique éthoxylé (15)-polypropoxylé (15) ayant une masse moléculaire d'environ 1600;
- 38,9 parties de sulfate d'ammonium ou d'une combinaison 15,4/24 de sulfate d'ammonium avec du phosphate d'ammonium.

6. Solution d'oxyfluorfène comprenant :
- 3,1 parties d'oxyfluorfène (69 % d'ingrédients actifs);
- 9 parties d'amine de suif éthoxylée (15);
- 0,4 partie d'éther styrylphénylique éthoxylé (14-19);
- 0,1 partie d'huile de ricin éthoxylée (50);
- 0,5 partie d'agent tensio-actif en organosilicone;
- 6,0 parties d'éther 2-éthylhexylique éthoxylé (15)-propoxylé (15) ayant une masse moléculaire d'environ 1600.

7. Procédé pour détruire ou maîtriser des mauvaises herbes en appliquant à la plante devant être détruite ou maîtrisée une quantité efficace de la composition de la revendication 5 ou telle qu'elle peut être obtenue selon le procédé des revendications 1-4.
